# EUROPEAN PATENT APPLICATION

(11) **EP 1 705 866 A1**
(43) Date of publication of application: **27.09.2006**
(21) Application number: 06117308.4
(22) Date of filing: 22.05.2003
(51) Int. Cl.: H04L 29/06, H04Q 7/24, H04L 12/28

(54) **Flow-based selective reverse tunneling in wireless local area network (WLAN)-cellular systems**

(30) Priority: 28.05.2002 US 383754 P; 14.11.2002 US 294206
(62) Divisional of application: 03756205.5
(71) Applicant: INTERDIGITAL TECHNOLOGY CORPORATION, Wilmington, DE 19801 (US)
(72) Inventor: Chitrapu, Prabhakar, R., Blue Bell, PA 19422 (US)
(74) Representative: Pierrou, Mattias

(57) **Abstract**

At least one subscriber is subscribed to both a cellular network (30) and a wireless local area network WLAN (22). The subscriber (20) is located in the WLAN. Flows of the subscriber are provided for transfer. Each flow comprises packets. For each flow a determination is made on whether that flow is to be routed directly through the WLAN or through both the WLAN and cellular network. Each flow's packets are routed based on that flow's routing determination.

## Description

BACKGROUND

This invention generally relates to interconnected systems of wireless local area networks (WLANs) and cellular networks. In particular, the invention relates to routing packets within such systems.

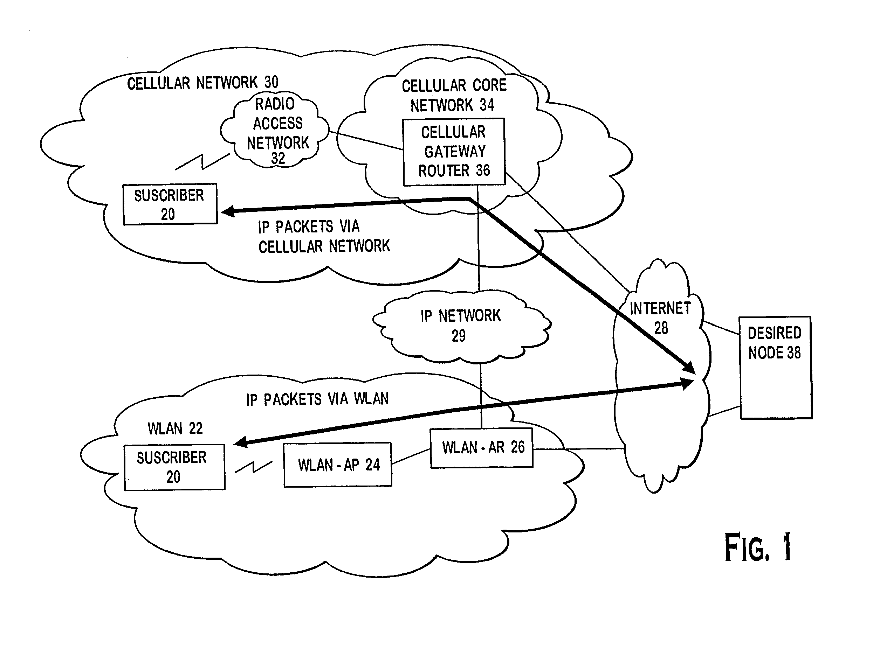

Figure 1 is a simplified illustration of a cellular network 30 and a wireless local area network (WLAN) 22. A subscriber 20 has a subscription to both a WLAN 22 and a cellular network 30. WLANs, such as WLAN 22, are typically used to provide high speed data services to hot spot areas.

The WLAN 22 has a WLAN access point (WLAN-AP) 24 so that the subscriber 20 can access the WLAN 22 and a WLAN access router (WLAN-AR) 26 for routing packets coming into and leaving the WLAN 22, via the Internet 28.

The cellular network 30 has a radio access network 32 so that the subscriber 20 can access the network 30 and a cellular core network 34. The cellular core network 34 has a cellular gateway router 30 for routing packets coming into and leaving the cellular system 30. The cellular core network 34 is also connected to the Internet 28.

For the subscriber 20 to utilize a wireless service, the subscriber 20 either utilizes the cellular system 30 or the WLAN 22. If the subscriber 20 is in the cellular system 30 and not within the WLAN 22, the subscriber 20 makes a wireless connection to the cellular access network 32. Packets are transferred between the cellular access network 32 and the cellular core network 34. The cellular gateway router 36 transfers packets between the cellular core network 34 and the Internet 28. The packets are routed through the Internet 28 to a desired node, such as a destination server.

If the subscriber 20 is within the WLAN 22, the subscriber 20 is considered to be roaming with respect to the cellular network 30. The subscriber 20 makes a wireless connection to the WLAN-AP 24. Packets are transferred between the WLAN-AP 24 and the WLAN-AR 26. The WLAN-AR 26 transfers packets between the WLAN 22 and the Internet 28. The packets are routed through the Internet 28 to/from a desired node.

When a subscriber 20 moves from the cellular network 30 into the WLAN 22, sending packets from the subscriber 20 to the desired node 38 via the WLAN 22 can be performed using standard IP-packet routing tools. The desired node 38 has not moved. However, sending IP-packets from the desired node 38 to the subscriber 20 via the WLAN 22 is more problematic. If the subscriber 20 has a static IP address, the network ID of the subscriber's IP address is still the same as the network ID of the IP address of the router 36 of the cellular network 30.

Mobile IP versions 4 (MobileIPv4) and 6 (MobileIPv6) provide solutions to this problem. In MobileIPv4, the subscriber informs the cellular gateway router of its new location. These additional functions of the cellular gateway router and the WLAN-AR are referred to as Home Agent and Foreign Agent functions. When the cellular gateway router 36 receives the subscriber's packets from the desired node 38, the router 36 forwards them to the WLAN-AR 26. The WLAN-AR 26 sends the packets to the IP address of the subscriber 20 using layer 2 address mapping procedures, such as ARP.

A drawback with this approach is that packets originating from the subscriber 20 going through the WLAN 22 are not visible to the cellular network 30 or router 36. Another drawback with this approach is the increased loading on the cellular gateway router 36, due to the routing of all the subscriber's incoming packets.

In MobileIPv6, the subscriber 20 sends a binding update to the cellular gateway router 36 and the desired node 38. The binding update has information about the new network (WLAN 22) that the subscriber 20 is attached to. The IP packets from the destination node 38 are now routed directly to the subscriber 20 bypassing the cellular gateway router 36 and using standard IP routing protocols. A drawback with this approach is that packets originating from and going to the subscriber are not visible to the cellular network.

In some cases, it is undesirable that the IP packets are not visible to the cellular network 30. One reason is the security protocols of the cellular system 30 are circumvented. Additionally, certain services of the cellular system 30 can not be utilized, such as access to the cellular network's packet services.

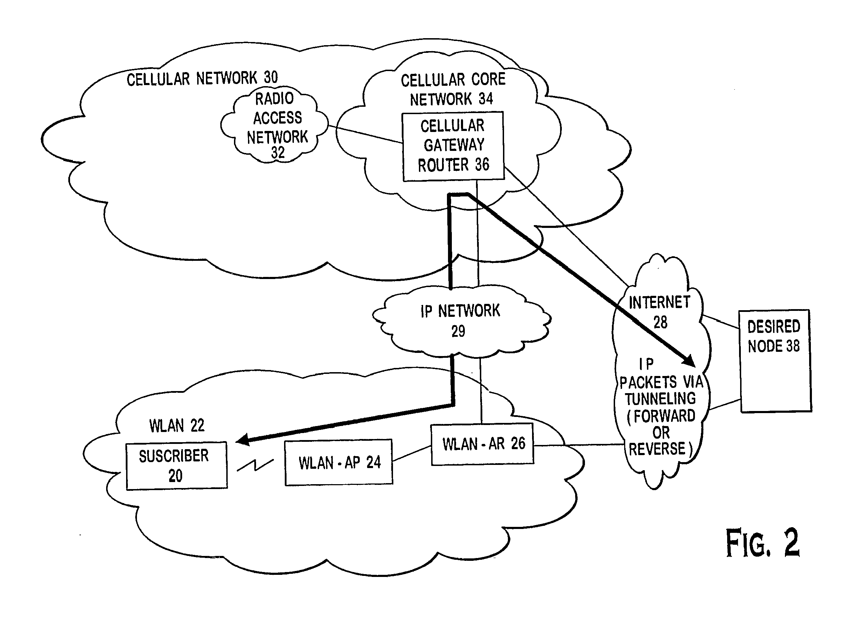

To allow all of the subscriber packets to be visible to the cellular network 30, reverse and/or forward tunneling can be used. As shown in Figure 2, in reverse tunneling, the packets from the subscriber 20 in the WLAN 22 are routed through both the WLAN 22 and the cellular network 30. Packets are transferred between the routers (cellular gateway router 36 and WLAN-AR 26) via an IP network 29. Reverse tunneling is supported by Mobile IPv4 and it allows all of the packets to be visible to the cellular network 30.

For MobileIPv6, both forward and reverse tunneling are needed to make the packets visible to the cellular network 30. In forward tunneling, the packets are also routed through both the cellular network 30 and the WLAN 22.

By routing all the packets through the cellular gateway router 36, the cellular system 30 can maintain security and provide cellular network based packet services to the subscriber 20, even when located in WLAN 22. To illustrate, the cellular gateway router 36 may send packets to a screening/monitoring agent for security purposes. One drawback to both these approaches is that the loading on the cellular gateway router is increased.

To reduce the routing on the cellular gateway router 36, selective reverse tunneling may be used. In selective reverse tunneling, packets are either selectively routed through both the cellular network 30 and the WLAN 22 or only through the WLAN 22, on a packet by packet basis. Such packet by packet routing is undesirable, since it increases the processing load. Furthermore, such packet level granularity may not be needed for most applications.

Accordingly, it is desirable to have alternate approaches to cellular network and WLAN routing.

SUMMARY

At least one subscriber is subscribed to both a cellular network and a wireless local area network (WLAN). The subscriber is located in the WLAN. Flows of the subscriber are provided for transfer. Each flow comprises packets. For each flow a determination is made on whether that flow is to be routed directly through the WLAN or through both the WLAN and cellular network. Each flow's packets are routed based on that flow's routing determination.

BRIEF DESCRIPTION OF THE DRAWING(S)

Figure 1 is an illustration of a cellular network and a WLAN.

Figure 2 is an illustration of reverse and forward tunneling.

Figure 3 is an illustration of selective reverse tunneling on a flow basis.

Figure 4 is a flow chart of selective flow-based reverse tunneling using direct and encapsulated delivery.

Figure 5 is a flow chart of selective flow-based reverse tunneling by adding routing information to packet headers.

Figure 6 is an illustration of routing to a secret agent using intermediate routing.

DETAILED DESCRIPTION OF THE PREFERRED EMBODIMENT(S)

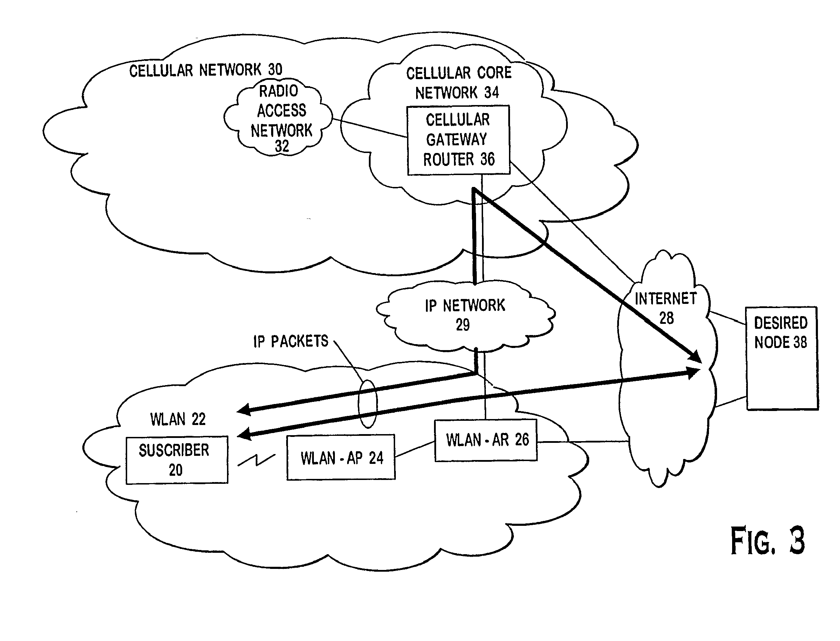

Figure 3 is an embodiment of flow-based reverse tunneling. On a flow by flow basis, packets are selectively either routed directly through the WLAN 22 to the subscriber 20 or through the cellular network 30 to the WLAN 22 to the subscriber 20 as shown in Figure 3. A flow of packets is defined by a 5-tuple. The 5-tuple is a source IP address, a destination IP address, a source port, a destination port and a transport protocol type. An alternate manner of characterizing a flow uses a 3-tuple. The 3-tuple has a Flow-label, a source IP address and a destination IP address. Each flow is typically a distinct session, such as a distinct TCP/IP session. The flows traditionally are used to differentiate between quality of service (QOS) treatment between flows.

The operator of the cellular network 30 and/or the subscriber 20 determines which flows are to be routed via the cellular network 30 or directly to the WLAN 22. One approach to make this determination is by the type of flow. To illustrate, the operator may decide to have all flows associated with instant messaging sent directly through the WLAN 22, reducing traffic in the cellular system 30. The operator may also decide to have all flows associated with email sent via the cellular network 30.

Alternately, the flow routing determination may be based on the cellular network traffic. If the cellular network 30 has a low loading all of the traffic is routed via the cellular network 30. As traffic increases, specific types of flows are routed directly through the WLAN 22. This flow transfer may be based on several priority levels. To illustrate, the loading on the cellular network 30 increases from a low loading to a moderate loading. At the moderate loading, a first set of flow types, such as instant messaging, are routed directly through the WLAN 22. At a high loading, a first set, such as instant messaging, and a second set, such as Internet browsing, are routed through the WLAN 22.

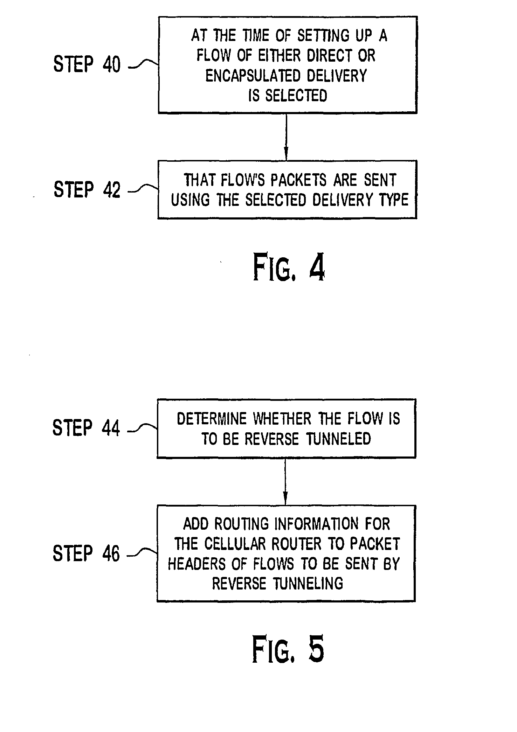

One approach to selectively direct the flows from the subscriber 20 to desired node 38 uses direct delivery and encapsulated delivery styles as shown in Figure 4. In direct delivery, the packets associated with a flow are sent directly through the WLAN 22. In encapsulated delivery, the packets associated with the flow are reverse tunneled, sent through the cellular system 30 and WLAN 22. An encapsulated packet encapsulates the packet having WLAN routing information with extra information for routing through the cellular network 30. One drawback to encapsulation is the extra overhead involved. At the time the subscriber 20 sets up a flow, either direct or encapsulated delivery is selected, step 40. After registration, the flow's packets are sent using the selected delivery type, step 42.

Another approach is to use routing headers, such as defined in the MobileIPv6. Routing headers allow an IP packet to be routed through specified intermediate nodes (routers). As shown in the flow chart of Figure 5, after determining if reverse tunneling is to be performed, step 44, the packets of flows to be reversed tunneled are routed via the intermediate cellular gateway router 36 of the cellular network 30 by adding the routing information to the header, step 46. Packets not to be reverse tunneled are routed normally, such as using the standard route optimization of MobileIPv6.

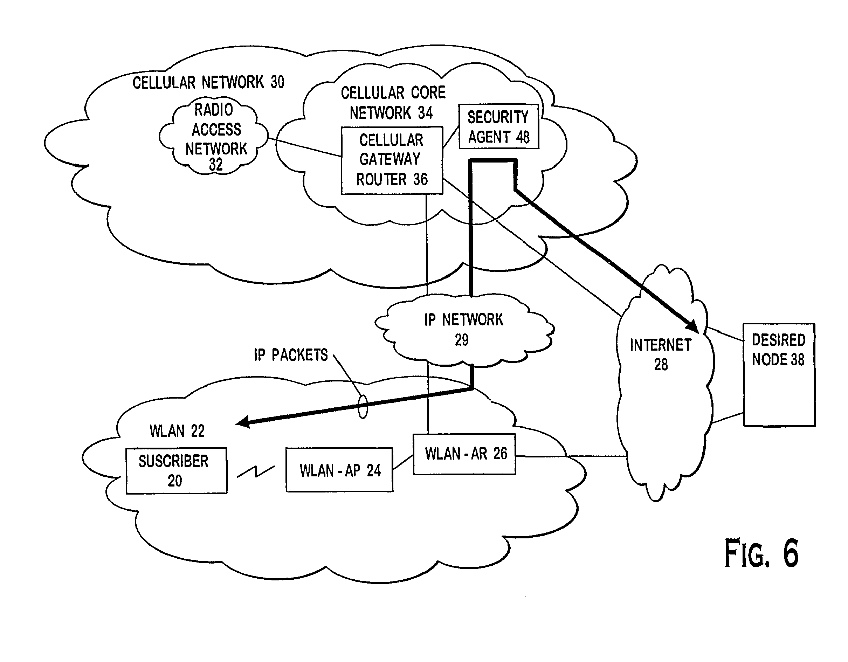

Alternately, in addition to selectively routing reverse tunneled packets through the cellular gateway router 36, this technique may be extended to add other intermediate nodes, such as a security agent 48 of the cellular system 30. To illustrate as shown in Figure 6, the packets of certain flows may be routed through the security agent 48 of the cellular network 30.

### SUMMARY OF EMBODIMENTS

1. A method for transferring packets for at least one subscriber subscribed to both a cellular network and a wireless local area network (WLAN), the method comprising when the subscriber is in the WLAN:
   providing flows comprising packets;
   for each flow, determining whether that flow is to be routed directly through the WLAN or through both the WLAN and cellular network; and
   selectively routing each flow's packets based on that flow's routing determination.
2. The method of embodiment 1 wherein the selective routing is performed by direct delivery if the packet is to be routed directly through the WLAN and by encapsulated delivery if the packet is to be routed through the WLAN and cellular network.
3. The method of embodiment 1 wherein the selective routing is performed by adding a cellular gateway router of the cellular network to routing information of a header of each flow's packet to be routed through the WLAN and cellular network.
4. The method of embodiment 1 wherein the routing determination is based on cellular network traffic.
5. The method of embodiment 1 wherein each flow is a distinct session.
6. The method of embodiment 5 wherein each flow is a distinct TCP/IP session.
7. The method of embodiment 1 wherein each flow differentiates between quality of service treatment.
8. A subscriber capable of operating in a cellular network and a wireless local area network (WLAN), the subscriber unit configured to perform steps comprising:
   for packets of a first group of selected flows, transferring those packets using direct delivery; and
   for packets of a second group of selected flows, transferring those packets using encapsulated delivery.
9. The subscriber of embodiment 8 wherein the first group is routed via the WLAN and the second group is routed via the cellular network.
10. The subscriber of embodiment 8 wherein each flow is a distinct session.
11. The subscriber of embodiment 10 wherein each flow is a distinct TCP/IP session.
12. The subscriber of embodiment 8 wherein each flow differentiates between quality of service treatment.
13. A subscriber capable of operating in a cellular network and a wireless local area network (WLAN), the subscriber unit configured to perform steps comprising:
   for packets of a first group of selected flows, transferring those packets via the cellular network by inserting into a header of those packets routing information to a specified node in the cellular network; and
   for packets of a second group of selected flows, transferring those packets without routing through the cellular network.
14. The subscriber of embodiment 13 wherein each flow is a distinct session.
15. The subscriber of embodiment 14 wherein each flow is a distinct TCP/IP session.
16. The subscriber of embodiment 13 wherein each flow differentiates between quality of service treatment.
17. A method for routing packets for at least one subscriber subscribed to both a cellular network and a wireless local area network (WLAN), the method comprising:
   determining a traffic loading for the cellular network;
   based on the traffic loading, determining types of flows for direct routing through the WLAN, wherein as the traffic loading increases, the types of directly routed flows increases;
   for packets of the subscriber for directly routed flows, routing those packets directly through the WLAN; and
   for packets of the subscriber for non-directly routed flows, routing those packets through the cellular network and the WLAN.
18. The method of embodiment 17 further comprising classifying the determined traffic loading into priority levels and the directly routed flow determination is based on the classified priority level of the determined traffic loading.
19. A wireless local area network access router (WLAN-AR) configured to perform steps comprising:
   registering a flow for a subscriber, the subscriber subscribed to both a cellular network and a wireless local area network (WLAN);
   determining whether direct or encapsulated delivery for the flow is desired based on the type of flow; and
   assigning the flow direct or encapsulated delivery based on the direct or encapsulated delivery determination.
20. A communication system comprising:
   a cellular network comprising a cellular gateway router;
   a wireless local area network (WLAN) comprising a WLAN access router (WLAN-AR); and
   a subscriber subscribed to both the cellular network and WLAN and the sunscriber residing in the WLAN, the subscriber transferring packets of flows; and
   wherein routing each packet either via the WLAN-AR and not the cellular gateway router or the cellular gateway router and WLAN-AR based on the flow of that packet.
21. The system of embodiment 20 wherein routing via the WLAN-AR and the cellular gateway router is by adding the cellular gateway router to routing information of a header of each flow's packet.
22. The system of embodiment 20 wherein routing via the WLAN-AR and the cellular gateway router is by adding the cellular gateway router to routing information of a header of each flow's packet.
23. The system of embodiment 20 wherein each flow is a distinct session.
24. The system of embodiment 23 wherein each flow is a distinct TCP/IP session.
25. The system of embodiment 20 wherein each flow differentiates between quality of service treatment.

## Claims

1. A subscriber unit capable of operating in a cellular network and a wireless local area network, WLAN, comprising:
means for transferring packets of a first group of selected flows by direct delivery; and
means for transferring packets of a second group of selected flows using encapsulated delivery.

2. The subscriber unit of claim 1, further comprising:
means for routing the first group via the WLAN; and
means for routing the second group via the cellular network.

3. The subscriber unit of claim 1, further comprising means for differentiating each flow between a quality of service treatment.
